# EUROPÄISCHE PATENTSCHRIFT

(11) **EP 1 376 064 B1**
(45) Veröffentlichungstag und Bekanntmachung des Hinweises auf die Patenterteilung: **06.08.2008**
(21) Anmeldenummer: 03006407.5
(22) Anmeldetag: 21.03.2003
(51) Int. Cl.: G01D 5/20

(54) **Lineare Wegmessvorrichtung**
Linear displacement sensor
Appareil pour déterminer la position linéaire d'un objet mobile

(30) Priorität: 17.06.2002 DE 10227019
(43) Veröffentlichungstag der Anmeldung: 02.01.2004
(73) Patentinhaber: FESTO AG & Co. KG, 73734 Esslingen (DE)
(72) Erfinder: Kiessling, Albert, 71263 Weil der Stadt (DE); Reininger, Thomas, 73249 Wernau (DE)
(74) Vertreter: Vetter, Hans

(56) Entgegenhaltungen:
- WO-A-00/55571
- DE-A- 3 424 461
- DE-B- 1 299 432
- DE-C- 3 343 269
- FR-A- 2 609 798

## Beschreibung

Die Erfindung betrifft eine lineare Wegmessvorrichtung, insbesondere zur Bestimmung der Kolbenposition in einer fluidischen Zylinderanordnung, mit einer langgestreckten Messspule und mit einem entlang der Messspule bewegbaren Messglied, dessen Position relativ zur Messspule die Brückenspannung einer Wechselspannungs-Messbrücke beeinflusst, deren Brückenlängszweig durch die Messspule gebildet wird.

Bei einer derartigen, aus der DE 34 24 461 A1 bekannten Wegmessvorrichtung wird ein magnetischer Kolben innerhalb der langgestreckten Messspule bewegt. Dieser besteht aus einer magnetischen Substanz und wirkt auch als Kern, er ist jedoch nicht permanentmagnetisch und kann auch kein eigenes Magnetfeld erzeugen. Ein feststehender Kern mit einstellbaren magnetischen Eigenschaften ist nicht vorgesehen.

Aus der FR-A-26 09 798 ist eine ähnliche Anordnung bekannt, bei der ein die Induktanz verändernder Kolben entlang der Messspule einer Brückenanordnung bewegt wird. Auch hier ist weder ein bewegbarer Permanentmagnet noch ein feststehender Spulenkern vorgesehen.

Aus der DE 12 99 432 ist zwar die Verwendung eines Eisenkerns zur Erhöhung der Empfindlichkeit einer Spule bekannt, jedoch in Verbindung mit einer ansonsten völlig anderen Messeinrichtung. Ein Permanentmagnet ist auch hier nicht vorgesehen.

Aus der EP-A-0238922 ist eine lineare Wegmessvorrichtung bekannt, die jedoch neben der langgestreckten Messspule noch zwei zusätzliche Sekundärspulen an den beiden entgegengesetzten Endbereichen benötigt. Nachteilig an der bekannten Wegmessvorrichtung ist zum einen die relativ aufwendige Herstellung mit drei Spulen, und zum anderen entstehen für die Messung Totzonen an den Spulenenden im Bereich der Sekundärspulen. Schließlich wird die bekannte Anordnung mit einer Dreieckspannung beaufschlagt, die naturgemäß starke Oberwellen verursacht und die die Bandbreite des Kernmaterials auf Frequenzen von 3 - 10 kHz begrenzt.

Aus der DE 19611810 C2 ist eine Wechselspannungs-Messbrücke bekannt, die in einem Brückenlängszweig zwei Spulen und im zweiten Brückenlängszweig zwei Kondensatoren enthält. Diese Messbrücke dient jedoch als Näherungsschalter und ist nicht zur Positionsbestimmung eines entlang eines Brückenlängszweigs verfahrbaren Permanentmagneten vorgesehen.

Eine Aufgabe der vorliegenden Erfindung besteht darin, die bekannte lineare Wegmessvorrichtung so zu verbessern, dass die spezifische Ansprechempfindlichkeit veränderbar ist.

Diese Aufgabe wird erfindungsgemäß durch eine lineare Wegmessvorrichtung mit den Merkmalen des Anspruchs 1 gelöst.

Die Vorteile der erfindungsgemäßen Wegmessvorrichtung bestehen insbesondere darin, dass durch Wahl der als dünne Drähte vorliegenden unterschiedlichen Materialien die spezifische Ansprechempfindlichkeit in einfacher Weise verändert werden kann, wobei durch die einzige langgestreckte Messspule unter Vermeidung von Sekundärspulen keine randseitigen Totzonen für die Messung entstehen. Die Anordnung dieser langgestreckten Messspule in einer Wechselspannungs-Messbrücke führt zu einer hohen Messgenauigkeit. Da nur eine Spule gewickelt werden muss, ergibt sich eine einfachere und kostengünstigere Herstellung. Die erfindungsgemäße Wegmessvorrichtung gestattet die Verwendung einer Sinusspannung als Erregerspannung anstelle der bekannten Dreieckspannung, wodurch selbst bei kristallinem Kernmaterial Frequenzen bis etwa 200 kHz verwendbar sind, so dass die Messgeschwindigkeit gegenüber der bekannten Vorrichtung wesentlich erhöht werden kann.

Durch die in den Unteransprüchen aufgeführten Maßnahmen sind vorteilhafte Weiterbildungen und Verbesserungen der im Anspruch 1 angegebenen Wegmessvorrichtung möglich.

Die Messspule besitzt vorzugsweise einen symmetrisch zur Spule angeordneten Spulenkern, so dass die Brückenspannung im Brückenquerzweig ohne Beeinflussung durch den Permanentmagneten oder in dessen Mittelposition zu Null wird.

Die Messspule besitzt zweckmäßigerweise als Spulenkörper ein Kunststoffrohr, beispielsweise ein faserverstärktes Kunststoffrohr, das den Spulenkern enthält. Dies führt auch bei langgestreckten Messspulen zu einem sicheren mechanischen Aufbau ohne die Gefahr von Kurzschlüssen zwischen Messspule und Kern. Der aus einer Vielzahl von ferromagnetischen Drähten bestehende Spulenkern kann spannungsfrei in das Kunststoffrohr eingeschoben werden. Als besonders günstig haben sich spannungsfrei geglühte, kristalline Mumetalldrähte erwiesen. Um Skineffektverluste zu vermeiden, werden viele dünne Drähte bevorzugt. Weiterhin eignen sich für den Spulenkern auch nanokristalline bzw. amorphe Metalldrähte, die vorzugsweise glasummantelt sind. Sie können insbesondere zu einem Kern verschmolzen bzw. verklebt sein.

Ein Spulenende ist in einer vorteilhaften Ausführungsvariante mit dem eine elektrische Rückführung bildenden Spulenkern durch eine Quetsch-, Löt- oder Punktschweißverbindung elektrisch verbunden, so dass die Auswerteschaltung an einem Spulenende angeordnet sein kann, ohne dass eine zusätzliche elektrische Verbindung zum gegenüberliegenden Spulenende erforderlich wäre.

Die Variabilität der Einsatzmöglichkeiten kann dadurch wesentlich verbessert werden, dass die vorgefertigte lange Spule symmetrisch zur Spulenmitte beidseitig ablängbar ausgebildet ist, wobei die abgelängten Spulenenden durch eine Quetsch-, Löt- oder Schweißverbindung kontaktiert werden können.

Zur Anpassung der Ansprechempfindlichkeit und der Spuleninduktivität an unterschiedliche Spulenlängen, sonstige Dimensionen, Umgebungen und Materialien wird in vorteilhafter Weise dem die Messbrücke speisenden Wechselstrom ein Gleichstrom überlagert, der zu einer Vormagnetisierung des Spulenkerns führt. Alternativ oder zusätzlich kann die Ansprechempfindlichkeit auch durch Variation der Erregerfrequenz angepasst werden. Durch die Variation der Erregerfrequenz ergeben sich unterschiedliche Eindringtiefen für das Wechselmagnetfeld, so dass der effektive Querschnitt des Kerns durch die Erregerfrequenz verändert werden kann.

Zur Abschirmung von magnetischen Fremdfeldern eignet sich ein weichmagnetischer Rückschlusskern, der insbesondere aus amorphen dünneren Metallstreifen und einem dickeren kristallinen Material besteht bzw. zusammengesetzt ist. Die amorphen Metallstreifen haben die Aufgabe, das magnetische Wechselfeld der Messspule zu führen, ohne in das kristalline Material einzudringen und Wirbelstromverluste zu verursachen. Das kristalline Material hat die Aufgabe, externe, niedrigfrequente Magnetfelder von dem Spulenkern fernzuhalten.

Die Auswerteeinrichtung besitzt zweckmäßigerweise einen Phasendiskriminator, durch den die Position des Permanentmagneten zwischen links und rechts der Mitte unterschieden werden kann.

Die Brückenglieder im zweiten Brückenlängszweig sind induktive und/oder kapazitive und/oder ohmsche Brückenglieder, wobei ohmsche Brückenglieder und kapazitive Brückenglieder besonders preisgünstig sind. Lediglich die Phasenbeziehungen der Brückenspannung ändern sich um +90° oder -90°, was nicht weiter störend ist.

In einer vorteilhaften Anwendung ist die Messspule an oder in der Wandung eines fluidischen Zylinders in dessen Längsrichtung angeordnet, und der Kolben des Zylinders ist mit dem Permanentmagneten versehen. Vorzugsweise wird die Messspule in einer ohnehin vorhandenen äußeren Längsnut des Zylinders untergebracht.

Die Auswerteeinrichtung und/oder eine Spannungsversorgungseinrichtung ist vorzugsweise an oder in einem stirnseitigen Abschlussdeckel des Zylinders angeordnet, was insbesondere in Verbindung mit einer elektrischen Rückführung des entgegengesetzten Spulenendes über den Spulenkern von Vorteil ist.

Ein Ausführungsbeispiel der Erfindung ist in der Zeichnung dargestellt und in der nachfolgenden Beschreibung näher erläutert. Es zeigen:
- Figur 1: ein schematisches Schaltbild einer linearen Wegmessvorrichtung als Ausführungsbeispiel der Erfindung,
- Figur 2: eine Querschnittsdarstellung der Messspule und
- Figur 3: eine Seitenansicht eines mit der linearen Wegmessvorrichtung versehenen fluidischen Zylinders.

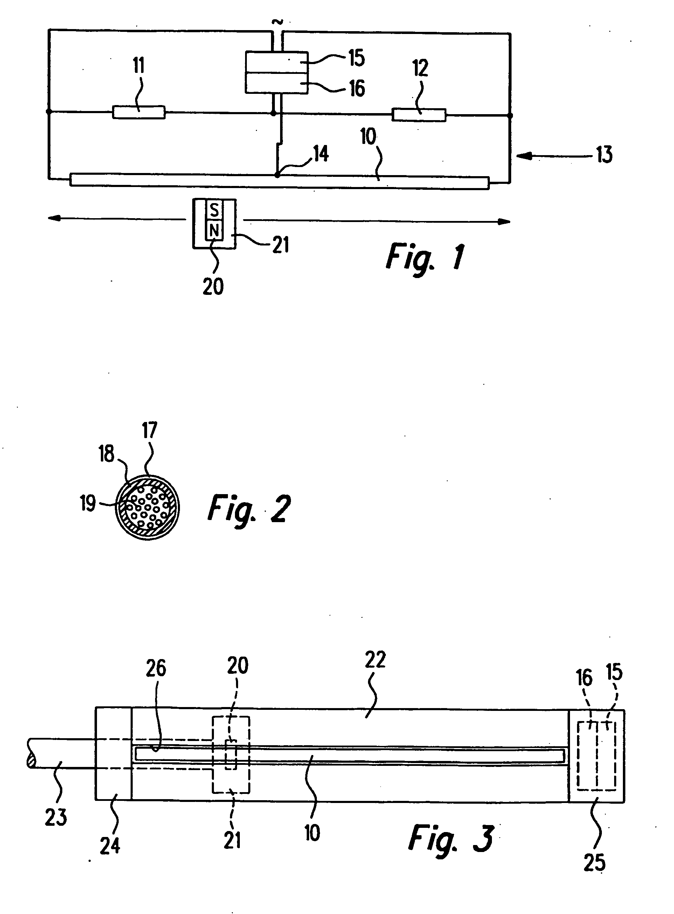

Bei dem in Figur 1 dargestellten Schaltbild bildet eine langgestreckte Messspule 10 einen ersten Brückenlängszweig und zwei in Reihe geschaltete gleiche Widerstände 11, 12 einen zweiten Brückenlängszweig einer Wechselspannungs-Messbrücke 13, im Folgenden kurz Messbrücke 13 genannt. Die Messspule 10 besitzt einen symmetrischen Mittelabgriff 14 und könnte prinzipiell auch aus zwei symmetrischen Messspulen bestehen.

Eine Spannungsversorgungseinrichtung 15 versorgt die Messbrücke 13 mit einer Wechselspannung, deren Frequenz bis etwa 200 kHz betragen kann. Es handelt sich dabei im Wesentlichen um eine Sinusspannung.

Die Brückenspannung, also die Spannung zwischen dem Mittelabgriff 14, der Messspule 10 und dem Verknüpfungspunkt zwischen den Widerständen 11 und 12, ist einer Auswerteeinrichtung 16 zugeführt, die optional einen Phasendiskriminator enthält.

Die Auswerteeinrichtung 16 und die Spannungsversorgungseinrichtung 15 sind zu einem Elektronikmodul zusammengefasst, sie können selbstverständlich auch separate Einheiten bilden.

Anstelle der beiden Widerstände 11, 12 kann der zweite Brückenzweig alternativ oder zusätzlich auch zwei Kondensatoren und/oder zwei Spulen enthalten. Wesentlich ist dabei der symmetrische Aufbau des zweiten Brückenlängszweiges.

Gemäß der Schnittdarstellung in Figur 2 ist die Wicklung 17 der Messspule 10 auf einen Spulenkörper 18 gewickelt, der als faserverstärktes Kunststoffrohr ausgebildet ist. In den Durchgangskanal des Spulenkörpers 18 ist eine Vielzahl von Metalldrähten eingeschoben und fixiert, die einen Spulenkern 19 bilden. Dabei kann es sich beispielsweise um spannungsfrei geglühte, kristalline Mumetalldrähte handeln, wobei möglichst viele dünne Drähte bevorzugt werden. Der Spulenkern 19 kann jedoch auch aus nanokristallinen bzw. amorphen Metalldrähten bestehen, die beispielsweise glasummantelt sind und zu einem Kern verschmolzen bzw. verklebt sind. In diesem Falle könnte auch auf einen Spulenkörper 18 verzichtet werden.

Ein Permanentmagnet 20 ist an einem entlang der Messspule 10 bewegbaren Körper 21 fixiert, dessen Position relativ zur Messspule 10 erfasst werden soll. Bei diesem Körper 21 kann es sich beispielsweise um den Kolben eines fluidischen Zylinders handeln, wie in Verbindung mit Figur 3 noch näher erläutert wird.

An den Enden der Messspule 10 wird die Wechselspannung der Spannungsversorgungseinrichtung 15 eingespeist. Bei einem absolut symmetrischen Spulenkern 19 und homogener Wicklung 17 stellt sich an der Mittelanzapfung genau die halbe Spannung ein. Da die Widerstände 11, 12 oder andere Brückenglieder des zweiten Brückenlängszweiges ebenfalls symmetrisch ausgebildet sind, stellt sich eine Spannung Null als Brückenspannung ein. Wird nun die Messspule 10 dem Magnetfeld des Permanentmagneten 20 ausgesetzt, so ergibt sich bei unsymmetrischer Beaufschlagung eine Unsymmetrie in der Brückenschaltung. Die Brückenspannung ändert sich analog zur Auslenkung des Magneten aus der Spulenmitte. Bei einer Position des Permanentmagneten 20 in der Spulenmitte ist die Brückenspannung 0 Volt. Rechts und links von der Spulenmitte ist die Wechselspannungsphase der Messwechselspannung phasenverschoben gegenüber der erregenden Wechselspannung, so dass der Phasendiskriminator unterscheiden kann, ob sich der Permanentmagnet 20 links oder rechts der Mitte befindet. Die Phasenverschiebung hängt von der Art der Brückenglieder im zweiten Brückenlängszweig ab. Handelt es sich um induktive Brückenglieder, so ist die Phasenverschiebung 180°. Bei ohmschen oder kapazitiven Brückengliedern beträgt die Phasenverschiebung 90°.

Die Auswerteeinrichtung 16 kann nun mit einer Positionsanzeigevorrichtung versehen sein, oder sie leitet das Positionsmesssignal einer Steuerung oder Regelung für die Position des Körpers 21 zu.

Die Vielzahl der Anwendungen erfordert eine Vielzahl von unterschiedlichen Längen für die Messspule 10. Es wird daher eine vorgefertigte lange Spule hergestellt, die durch symmetrisches Ablängen zur Spulenmitte an die jeweilige Anwendung bzw. an die Länge der jeweiligen Messstrecke angepasst werden kann. Das Kontaktieren der abgelängten Messspule 10 an den Spulenenden erfolgt beispielsweise durch eine Quetsch-, Lötoder Schweißverbindung.

In Figur 3 ist eine Anwendung der beschriebenen Wegmessvorrichtung dargestellt. In einem fluidischen Zylinder 22 ist der mit einer Kolbenstange 23 verbundene, als Kolben ausgebildete Körper 21 verschiebbar geführt. Der Zylinder 22 ist an beiden Enden durch Abschlussdeckel 24, 25 verschlossen, wobei die Kolbenstange 23 durch den linken Abschlussdeckel 24 hindurchgreift. In einer Längsnut 26 an der Außenseite des Zylinders 22 ist die Messspule 10 angeordnet. Sie könnte prinzipiell auch an einer anderen Stelle der Außenwandung in der Längsrichtung oder im Inneren der Zylinderwandung integriert sein.

Im rechten Abschlussdeckel 25 sind die Auswerteeinrichtung 16 und die Spannungsversorgungseinrichtung 15 untergebracht, wobei eine oder beide Einrichtungen auch außerhalb des Zylinders 22 angeordnet sein könnten. Zur Verringerung der Verdrahtung ist das von der Auswerteeinrichtung 16 entfernte Spulenende der Messspule 10 elektrisch mit dem Spulenkern 19 durch eine Quetsch-, Löt- oder Punktschweißverbindung verbunden, so dass der Spulenkern 19 die elektrische Rückführung übernimmt. Der Mittelabgriff 14 muss über eine in der Längsnut 26 geführte Leitung mit der Auswerteeinrichtung 16 verbunden werden.

Die Anpassung der Ansprechempfindlichkeit und der Spuleninduktivität der Messspule 10 an unterschiedliche Zylinderlängen kann durch Überlagerung eines Spulengleichstroms erfolgen, der zu einer Vormagnetisierung des Spulenkerns 19 führt. Die erforderliche Gleichspannung kann ebenfalls durch die Spannungsversorgungseinrichtung 15 zur Verfügung gestellt werden.

Alternativ oder zusätzlich kann die Ansprechempfindlichkeit an unterschiedliche Zylinderlängen auch durch Variation der Erregerfrequenz angepasst werden, sofern der Kern aus einem oder mehreren dicken kristallinen Metalldrähten besteht. Durch die Variation der Frequenz ergeben sich unterschiedliche Eindringtiefen für das Wechselmagnetfeld, so dass der effektive Querschnitt des Kerns durch die Frequenz verändert werden kann.

Eine Temperaturkompensation des Wicklungswiderstandes der Messspule 10 und der Spulenverluste kann durch geschickte Wahl von Spulendrahtquerschnitt und Erregerfrequenz erfolgen. Je dicker der Spulendraht, umso eher wirken sich die Skineffekte im Draht aus. Während der Leitungswiderstand des Spulendrahts bei niedrigen Frequenzen mit der Temperatur zunimmt, nimmt er bei hohen Frequenzen, wo die Skineffekte überwiegen, mit der Temperatur ab, so dass sich ein Temperatur-Kompensationspunkt finden lässt.

Die Abschirmung von magnetischen Fremdfeldern kann durch einen nicht dargestellten weichmagnetischen Rückschlusskern erfolgen, der aus amorphen dünnen Metallstreifen und einem dicken kristallinen Material zusammengesetzt ist. Die amorphen Metallstreifen haben die Aufgabe, das magnetische Wechselfeld der Messspule 10 zu führen, ohne in das kristalline Material einzudringen und Wirbelstromverluste zu verursachen, der kristalline Teil hat die Aufgabe, externe, niedrigfrequente Magnetfelder vom Spulenkern 19 fernzuhalten.

In einer alternativen nicht dargestellten Ausführungsform kann die Messspule auch symmetrisch an einem Abschlussdeckel eines fluidischen Zylinders angeordnet sein und in die rohrartig ausgebildet hohle Kolbenstange je nach Position derselben mehr oder weniger eintauchen. Der Permanentmagnet kann dabei am Kolben oder an einer anderen Stelle der Kolbenstange angeordnet sein. Es ist auch denkbar, unter Verzicht auf einen Permanentmagneten den Kolben und/oder die Kolbenstange aus einem ferromagnetischen Material herzustellen, so dass dadurch eine Unsymmetrie des Magnetkerns auftritt, die die Grundlage der Messung bildet. Der umgekehrte Fall ist ebenfalls denkbar, d.h., die Messspule ist in der Kolbenstange angeordnet und wird zusammen mit dieser bewegt, während ein Permanentmagnet an der Zylinderwandung oder einer sonstigen Stelle am Bewegungsweg der Kolbenstange angeordnet ist, so dass wiederum eine Relativbewegung zwischen Messspule und Permanentmagnet auftritt.

Das Kernmaterial der Messspule 10 kann auch aus unterschiedlichen ferromagnetischen Materialien bestehen, d.h., unterschiedlichen weichmagnetischen Materialien, um dadurch die spezifische Ansprechempfindlichkeit verändern zu können. Die unterschiedlichen ferromagnetischen Materialien können - wie bereits beschrieben - als dünne Drähte vorliegen.

Die Erfindung ist selbstverständlich nicht auf die Anwendung einer Positionsbestimmung für Zylinderkolben beschränkt, sondern kann überall dort eingesetzt werden, wo Körper Linearbewegungen ausführen, die mit einem Permanentmagneten versehen werden können. Die Länge der Messspule 10 kann nahezu beliebig groß sein, so dass eine Anpassung an sehr unterschiedliche Messstrecken erfolgen kann.

## Patentansprüche

1. Lineare Wegmessvorrichtung, insbesondere zur Bestimmung der Kolbenposition in einer fluidischen Zylinderanordnung, mit einer langgestreckten Messspule (10) mit Mittelabgriff (14), wobei die beiden Teilspulen dieser Messspule (10) einen ersten Brückenlängszweig einer Wechselspannungs-Messbrücke (13) bilden und der zweite Brückenlängszweig durch zwei weitere symmetrische Brückenglieder (11, 12) gebildet wird, mit einem entlang der Messspule (10) bewegbaren Permanentmagneten (20), dessen Längsposition relativ zur Messspule (10) erfasst werden soll und dessen Magnetfeld auf die Messspule (10) einwirkt, und mit einem die Brückenspannung zwischen den Mittelabgriffen der Brückenlängszweige als Positionssignal verarbeitenden Auswerteeinrichtung (16), wobei die Messspule (10) einen Spulenkern besitzt, der aus einer Mischung von verschiedenen ferromagnetischen Drähten besteht.

2. Wegmessvorrichtung nach Anspruch 1, **dadurch gekennzeichnet, dass** der Spulenkern (19) zur Messspule (10) symmetrisch ist.

3. Wegmessvorrichtung nach Anspruch 2, **dadurch gekennzeichnet, dass** die Messspule (10) als Spulenkörper (18) ein Kunststoffrohr besitzt, das den Spulenkern (19) enthält.

4. Wegmessvorrichtung nach einem der vorhergehenden Ansprüche, **dadurch gekennzeichnet, dass** der Spulenkern (19) spannungsfrei geglühte, kristalline Mumetalldrähte enthält.

5. Wegmessvorrichtung nach einem der vorhergehenden Ansprüche, **dadurch gekennzeichnet, dass** der Spulenkern (19) nanokristalline oder amorphe ferromagnetische Metalldrähte enthält, die insbesondere glasummantelt sind.

6. Wegmessvorrichtung nach einem der vorhergehenden Ansprüche, **dadurch gekennzeichnet, dass** die Drähte zur Bildung des Spulenkerns (19) verschmolzen oder verklebt sind.

7. Wegmessvorrichtung nach einem der vorhergehenden Ansprüche, **dadurch gekennzeichnet, dass** ein Spulenende der Messspule (10) mit dem eine elektrische Rückführung bildenden Spulenkern (19) durch eine Quetsch-, Löt- oder Punktschweißverbindung elektrisch verbunden ist.

8. Wegmessvorrichtung nach einem der vorhergehenden Ansprüche, **dadurch gekennzeichnet, dass** die Messspule (10) symmetrisch zur Spulenmitte beidseitig symmetrisch ablängbar ist und die abgelängten Spulenenden durch eine Quetsch-, Löt- oder Schweißverbindung kontaktiert sind.

9. Wegmessvorrichtung nach einem der vorhergehenden Ansprüche, **dadurch gekennzeichnet, dass** zur Anpassung der Ansprechempfindlichkeit und der Spuleninduktivität an unterschiedliche Dimensionen, Umgebungen und Materialien dem die Messbrücke (13) speisenden Wechselstrom ein Gleichstrom überlagert ist und/oder die Erregerfrequenz einstellbar ist.

10. Wegmessvorrichtung nach einem der vorhergehenden Ansprüche, **dadurch gekennzeichnet, dass** ein weichmagnetischer Rückschlusskern vorgesehen ist, der insbesondere aus amorphen dünneren Metallstreifen und einem dickeren kristallinen Material besteht.

11. Wegmessvorrichtung nach einem der vorhergehenden Ansprüche, **dadurch gekennzeichnet, dass** die Auswerteeinrichtung (16) einen Phasendiskriminator besitzt.

12. Wegmessvorrichtung nach einem der vorhergehenden Ansprüche, **dadurch gekennzeichnet, dass** die Brückenglieder (11, 12) im zweiten Brückenlängszweig induktive und/oder kapazitive und/oder ohmsche Brückenglieder sind.

13. Wegmessvorrichtung nach einem der vorhergehenden Ansprüche, **dadurch gekennzeichnet, dass** die Messspule (10) an oder in der Wandung eines fluidischen Zylinders (22) in dessen Längsrichtung angeordnet ist und der Kolben des Zylinders (22) als bewegbarer Körper (21) mit dem Permanentmagneten (20) versehen ist.

14. Wegmessvorrichtung nach Anspruch 13, **dadurch gekennzeichnet, dass** die Messspule (10) in einer äußeren Längsnut (26) des Zylinders (22) untergebracht ist.

15. Wegmessvorrichtung nach Anspruch 13 oder 14, **dadurch gekennzeichnet, dass** die Auswerteeinrichtung (16) und/oder eine Spannungsversorgungseinrichtung (15) an oder in einem stirnseitigen Abschlussdeckel (25) des Zylinders angeordnet ist.

16. Wegmessvorrichtung nach einem der Ansprüche 1 bis 12, **dadurch gekennzeichnet, dass** die Messspule (10) in einer hohlen Kolbenstange eines fluidischen Zylinders angeordnet ist oder in diese eintaucht.

## Claims

1. Linear displacement sensing device, in particular for determining the piston position in a fluidic cylinder assembly, with an elongated measuring coil (10) with centre tap (14), wherein the two part-coils of the said measuring coil (10) form a first bridge longitudinal branch of an AC impedance bridge (13) and the second bridge longitudinal branch is represented by two further symmetrical bridge elements (11, 12), with a permanent magnet (20) movable along the measuring coil (10), the longitudinal position of which relative to the measuring coil (10) is to be detected and the magnetic field of which acts on the measuring coil (10), and with an evaluation device (16) processing the bridge voltage between the centre taps of the bridge longitudinal branches as a position signal, wherein the measuring coil (10) comprises a coil core made of a mixture of various ferromagnetic wires.

2. Displacement sensing device according to claim 1, **characterised in that** the coil core (19) is symmetrical relative to the measuring coil (10).

3. Displacement sensing device according to claim 2, **characterised in that** the measuring coil (10) comprises a plastic tube as a coil body (18) containing the coil core (19).

4. Displacement sensing device according to any of the preceding claims, **characterised in that** the coil core (10) contains stress-relief annealed, crystalline mu-metal wires.

5. Displacement sensing device according to any of the preceding claims, **characterised in that** the coil core (10) contains nanocrystalline or amorphous ferromagnetic metal wires which are in particular glass-sheathed.

6. Displacement sensing device according to any of the preceding claims, **characterised in that** the wires are fused or bonded together to form the coil core (19).

7. Displacement sensing device according to any of the preceding claims, **characterised in that** one coil end of the measuring coil (10) is electrically connected to the coil core (19) forming an electric return path by a crimped, soldered or spot-welded joint.

8. Displacement sensing device according to any of the preceding claims, **characterised in that** the measuring coil (10) can be cut to length on both sides symmetrical relative to the coil centre, and **in that** the cut-to-length coil ends are contacted by a crimped, soldered or welded joint.

9. Displacement sensing device according to any of the preceding claims, **characterised in that**, in order to match the sensitivity and coil inductance to varying dimensions, environments and materials, a direct current is superimposed on the alternating current feeding the measuring bridge (13) and/or the exciter frequency is adjustable.

10. Displacement sensing device according to any of the preceding claims, **characterised in that** a soft magnetic return core is provided, which is in particular made of amorphous thinner metal strips and a thicker crystalline material.

11. Displacement sensing device according to any of the preceding claims, **characterised in that** the evaluation device (16) comprises a phase discriminator.

12. Displacement sensing device according to any of the preceding claims, **characterised in that** the bridge elements (11, 12) in the second bridge longitudinal branch are inductive and/or capacitive and/or resistive bridge elements.

13. Displacement sensing device according to any of the preceding claims, **characterised in that** the measuring coil (10) is located on or in the wall of a fluidic cylinder (22) in the longitudinal direction thereof, and **in that** the piston of the cylinder (22) as a movable body (21) is fitted with the permanent magnet (20).

14. Displacement sensing device according to claim 13, **characterised in that** the measuring coil (10) is accommodated in an external longitudinal groove (26) of the cylinder (22).

15. Displacement sensing device according to claim 13 or 14, **characterised in that** the evaluation device (16) and/or a voltage supply device (15) are/is located in an end cover (25) of the cylinder.

16. Displacement sensing device according to any of claims 1 to 12, **characterised in that** the measuring coil (10) is located in or dips into a hollow piston rod of a fluidic cylinder.

## Revendications

1. Capteur de déplacement linéaire, en particulier pour déterminer la position du piston dans un ensemble de cylindre fluidique, avec une bobine détectrice étirée en longueur (10) à prise médiane (14), les deux bobines partielles de cette bobine détectrice (10) formant une première branche longitudinale de pont d'un pont de mesure à courant alternatif (13) et la seconde branche longitudinale de pont étant formée par deux autres éléments de pont symétriques (11, 12), avec un aimant permanent (20) mobile le long de la bobine détectrice (10), dont la position longitudinale par rapport à la bobine détectrice (10) doit être détectée et dont le champ magnétique agit sur la bobine détectrice (10), et avec un dispositif d'évaluation (16) traitant la tension du pont entre les prises médianes des branches longitudinales de pont comme signal de position, la bobine détectrice (10) possédant un noyau de bobine qui se compose d'un mélange de différents fils ferromagnétiques.

2. Capteur de déplacement selon la revendication 1, **caractérisé en ce que** le noyau de bobine (19) est symétrique par rapport à la bobine détectrice (10).

3. Capteur de déplacement selon la revendication 2, **caractérisé en ce que** la bobine détectrice (10) en tant que corps de bobine (18) possède un tube en matière plastique qui contient le noyau de bobine (19).

4. Capteur de déplacement selon l'une des revendications précédentes, **caractérisé en ce que** le noyau de bobine (19) contient des mumétaux cristallins, recuits sans tension.

5. Capteur de déplacement selon l'une des revendications précédentes, **caractérisé en ce que** le noyau de bobine (19) contient des fils métalliques nanocristallins ou ferromagnétiques amorphes qui sont notamment enveloppés de verre.

6. Capteur de déplacement selon l'une des revendications précédentes, **caractérisé en ce que** les fils sont liés par fusion ou collés pour former le noyau de bobine (19).

7. Capteur de déplacement selon l'une des revendications précédentes, **caractérisé en ce qu'**une extrémité de la bobine détectrice (10) est reliée électriquement au noyau de bobine (19) formant un retour électrique par une connexion sertie, une liaison brasée ou une liaison soudée par points.

8. Capteur de déplacement selon l'une des revendications précédentes, **caractérisé en ce que** la bobine détectrice (10) peut être mise à longueur de manière symétrique des deux côtés et de manière symétrique par rapport au milieu de la bobine et les extrémités de bobine mises à longueur sont mises en contact par une connexion sertie, une liaison brasée ou une liaison soudée par points.

9. Capteur de déplacement selon l'une des revendications précédentes, **caractérisé en ce qu'**un courant continu est superposé au courant alternatif alimentant le pont de mesure (13) et/ou la fréquence d'excitation peut être réglée pour l'adaptation de la sensibilité de réponse et de l'inductance de la bobine à différentes dimensions, environnements et matériaux.

10. Capteur de déplacement selon l'une quelconque des revendications précédentes, **caractérisé en ce qu'**un noyau de dérivation magnétique doux est prévu, lequel se compose en particulier de lames de métal amorphes, plus minces et d'un matériau cristallin plus épais.

11. Capteur de déplacement selon l'une des revendications précédentes, **caractérisé en ce que** le dispositif d'évaluation (16) possède un démodulateur de phase.

12. Capteur de déplacement selon l'une des revendications précédentes, **caractérisé en ce que** les éléments de pont (11, 12) dans la seconde branche longitudinale de pont sont des éléments de pont inductifs et/ou capacitifs et/ou ohmiques.

13. Capteur de déplacement selon l'une des revendications précédentes, **caractérisé en ce que** la bobine détectrice (10) est disposée sur ou dans la paroi d'un cylindre fluidique (22) dans son sens longitudinal et le piston du cylindre (22) comme corps mobile (21) est pourvu de l'aimant permanent (20).

14. Capteur de déplacement selon la revendication 13, **caractérisé en ce que** la bobine détectrice (10) est logée dans une rainure longitudinale (26) extérieure du cylindre (22).

15. Capteur de déplacement selon la revendication 13 ou 14, **caractérisé en ce que** le dispositif d'évaluation (16) et/ou un dispositif d'alimentation en courant (15) est disposé sur ou dans un couvercle de fermeture (25) du cylindre côté frontal.

16. Capteur de déplacement selon l'une des revendications 1 à 12, **caractérisé en ce que** la bobine détectrice (10) est disposée dans une tige de piston creuse d'un cylindre fluidique ou s'enfonce dans celle-ci.
